# EUROPEAN PATENT APPLICATION

(11) **EP 0 817 343 A2**
(43) Date of publication of application: **07.01.1998**
(21) Application number: 97108417.3
(22) Date of filing: 24.05.1997
(51) Int. Cl.: H02B 1/20

(54) **Metal cabinet with support means for electric cables associated to the electric apparatuses contained therein**

(30) Priority: 28.06.1996 IT PN960027 U
(71) Applicant: Hager-Lumetal S.p.A., 33080 Porcia, Pordenone (IT)
(72) Inventor: Vendrametto, Maurizio, 33080 Porcia, Pordenone (IT); Dal Santo, Roberto, 33080 Roveredo in Piano, Pordenone (IT)
(74) Representative: Agostini, Agostino

(57) **Abstract**

In a metal cabinet accomodating electric control and switching apparatuses there are provided elements (1), which are made as a single piece of electrically insulating material, for supporting, by means of a first protruding portion (4), the electric cables that are associated to said apparatuses and that extend in a first direction (X-X), for instance inside a raceway (2A). The support elements (1) are conceived in a rational manner and are fastened, by means of snap-fitting means (6A, 6B), on to a wall of the cabinet; they preferably comprise also a second protruding portion (18) to support a second raceway (2B) containing electric cables that extend in a second direction (Y-Y) running perpendicularly with respect to said first direction (X-X).

## Description

### STATE OF THE ART

The present invention refers to a metal cabinet substantially in the shape of a parallelepiped which has, on at least a wall thereof, one or more elements for supporting electric cables that are associated to electric control and switching apparatuses that are mounted in said cabinet.

For supporting the electric cables that are used for connection purposes and extend without any protective sheathing and/or inside appropriate raceways in a metal cabinet of the above mentioned kind, various parts are traditionally used which are not integrated in the general design of the cabinet itself, such as for instance metal brackets adapted to be attached to a wall (usually the rear one). A major drawback of these prior-art constructions derives not only from a frequent heterogeneity of the parts used to such a purpose, but also from a generalized use of screws to both fasten the same parts to a wall of the cabinet and lock in place the raceways inside which, in most cases, the electric connection cables are running. It therefore ensues that currently known cabinets of the above mentioned kind are far from being manufactured in a really rational and cost-effective manner.

### PURPOSES OF THE INVENTION

It is therefore a purpose of the present invention to solve in a really innovative, rational and cost-effective manner the problem associated with the support of the electric connection cables inside the cabinets containing electric control and switching apparatuses with reference to both cables extending through raceways and cables that are substantially not provided with any protective sheathing or similar means.

This aim is reached in a cabinet having the features and characteristics as recited in the appended claims.

### SHORT DESCRIPTION OF THE ACCOMPANYING DRAWINGS

Anyway, in order to enable the present invention to be more readily and clearly understood along with its characteristics and advantages, a detailed description of a preferred embodiment thereof will be given below by way of non-limiting example with reference to the accompanying drawings, in which:
- Figure 1 is an elevational view of a support element for electric cables which is a part of a metal cabinet accomodating electric control and switching apparatuses;
- Figure 2 is a perspective view from the bottom of the same support element illustrated in Figure 1;
- Figure 3 is another perspective view of the same support element attached to a structural part of the cabinet and with two raceways for the electric cables.

It will anyway be appreciated that it is well within the capability of those skilled in the art to derive further embodiments and variants thereof, without departing from the scope of the present invention.

### DESCRIPTION OF THE INVENTION

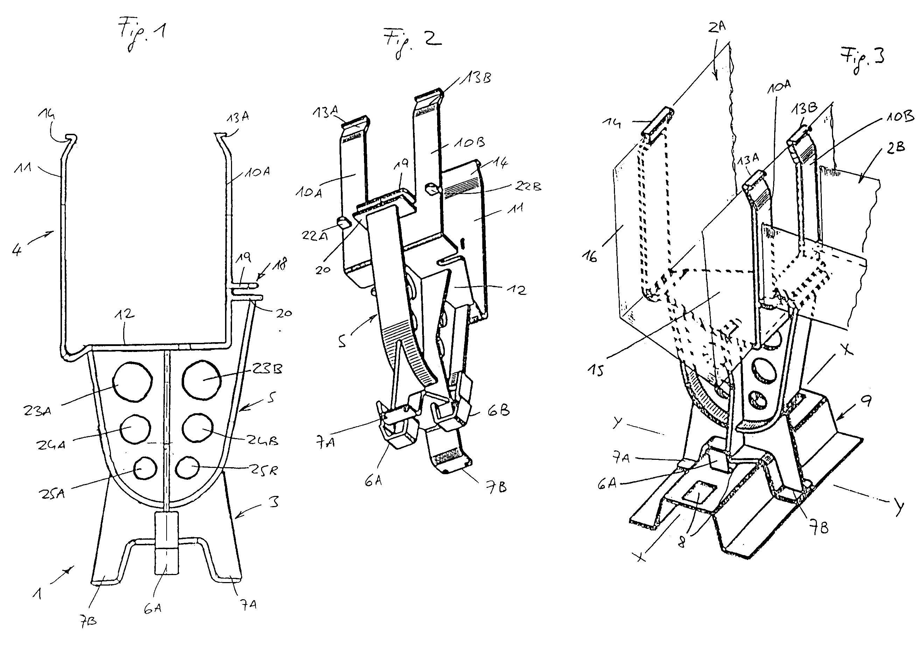

It is assumed that the general construction of the metal cabinet for electric control and switching apparatuses is already well-known in the art and that the metal cabinet is for instance - although not exclusively - of the type described in the Italian applications PN96U000023, PN96U000024 and PN96U000025 filed on May 30, 1996 by the same Applicant. According to the present invention, the use is provided of a plurality of support elements 1 for electric cables which, for instance, may extend inside well-known raceways, like the one that is generally shown schematically in Figure 3 at 2A and 2B. Alternatively, the cables can be simply guided inside the support elements, as this will be better explained further on.

In an advantageous manner, a support element 1 is made in a single piece of an electrically insulating material, preferably of a plastic material complying with the applicable standard regulations and filled with flame-extinguishing additives, and essentially comprises a base 3 and a protruding portion 4 interconnected by an elongated, substantially flat body 5.

In a more detailed manner, the base 3 comprises a first pair of feet 6A and 6B aligned along a first direction X-X, and having their free ends so shaped and bent as to be more or less parallel to the plane of the interconnecting body 5, and a second pair of feet 7A and 7B aligned according a second direction Y-Y running perpendicularly to said first direction X-X (see Figs. 2 and 3). The manner in which the first pair of feet 6A and 6B are shaped and formed is such as to enable the support element 1 to be snap-fitted on to associated slots 8 provided on the central side of a metal section bar 9 formed in the shape of an "omega", which is a part of one of the stationary walls of the metal cabinet, preferably the rear wall. The feet 7A and 7B of the second pair of feet are in turn adapted to abut against the outer sides of the same metal section bar 9, as this can be best seen in Figure 3.

The protruding portion 4 of the support element 1 comprises two fingers 10A and 10B, which are substantially aligned along the afore mentioned first direction X-X, and a third finger 11 opposing the other ones, the connection of these fingers with each other being ensured by a transverse band 12. The parts forming the protruding portion 4 are so shaped and arranged as to be able to retain the electric cables that extend along the afore cited first direction X-X, as this is best shown in Figure 3, regardless of their running "free" or inside one of the afore mentioned raceways, and namely the raceway 2A. In particular, the undercut-like shape imparted to the free ends 13A, 13B and 14 of the fingers 10A, 10B and 11 enables the same ends to engage the side edges 15, 16 of the raceway 2A which furthermore rests on the transverse connection band 12 (see Figures 2 and 3). Said undercut profilesare furthermore adapted to retain traditional covering section bars (not shown) extending over the full length of the same raceway or, anyway, over the cables in the case that the latter are simply guided inside the support elements 1. In this case, the covering section bars form, jointly with the fingers 10A, 10B and 11 and the transverse bands 12, wire guide rings.

The support element 1 has also a second protruding portion 18 formed by two overlapping, spaced-apart fins 19 and 20 that are adapted to retain a transverse edge of the end portion 21 of the second raceway 2B (see Figure 3) along which there are running the electric cables (not shown) extending in the above mentioned second direction Y-Y. In order to increase the resting stability of said end edge, two appendices 22A and 22B are appropriately provided laterally with respect to the fin 19, substantially at the basis of the fingers 10A and 10B.

Finally, the elongated body 5 of the support element 1 which, as this has already been stated earlier, has a substantially flat shape and extends on a plane passing through the straight line Y-Y, has three pairs of circular apertures 23A and 23B, 24A and 24B, 25A and 25B. The dimensions of these apertures are such as to enable either further electric cables and/or other parts associated to the electric apparatuses accomodated in the same metal cabinet and extending along the above cited direction X-X, such as for instance power conducting bars, to be introduced thereinto.

Thanks to the above described elements, which are specially conceived to allow for an almost instantaneous assembly and to support electric cables extending either along appropriate raceways or guided directly by the same support elements, the metal cabinet accomodating electric control and switching apparatuses according to the present invention ensure the best possible functional efficiency at particularly low costs.

## Claims

1. Metal cabinet substantially in the shape of a parallelepiped which has, attached on at least a wall thereof, at least an element for either directly or indirectly supporting electric cables that are associated to electric control and switching apparatuses that are mounted in said cabinet, **characterized in that** said support element (1), which is made integrally as a single piece of an electrically insulating material, comprises a base (3) and a first protruding portion (4), wherein said base (3) has snap-fitting fastening means (6A, 6B) arranged along a first direction (X-X) and adapted to co-operate with complementary slots (8) provided on said wall, and said protruding portion (4) is adapted to retain, on at least two opposite sides thereof, one or more electric cables also extending along said first direction (X-X).

2. Metal cabinet according to claim 1, **characterized in that** it also comprises a second protruding portion (18) which is adapted to form a retaining support for a raceway (2B) along which one or more further electric cables extend in a second direction (Y-Y) running perpendicularly with respect to said first direction (X-X).

3. Metal cabinet according to claim 2, **characterized in that** the base (3) of the support element (1) also comprises feet (7A, /B) resting on said wall of the cabinet, wherein the resting line of said feet (7A, 7B) extends along said second direction (Y-Y).

4. Metal cabinet according to claim 1, **characterized in that** said first protruding portion (4) comprises at least two mutually opposing fingers (10A, 10B; 11) with a transverse interconnecting band (12).

5. Metal cabinet according to claim 4, **characterized in that** on the free ends (13A, 13B; 14) of said fingers (10A, 10B; 11) there are provided undercut-like means adapted to retain the side edges (15, 16) of a raceway (2A) containing the electric cables that extend in said first direction (X-X).

6. Metal cabinet according to claim 5, **characterized in that** said undercut-like means are further adapted to also retain a covering section bar so that it, jointly with said fingers (10A, 10B; 11) and the transverse interconnecting band (12) therebetween, forms a wire guide ring.

7. Metal cabinet according to claim 2, **characterized in that**, between the resting base (3) and the afore cited first and second protruding portions (4, 18), it comprises an elongated body (5) which is substantially flat and provided with apertures (23A, 23B; 24A, 24B; 25A, 25B) adapted to allow for further electric cables and/or further electric parts, eg. conductive bars, extending in one of the afore cited directions (X-X; Y-Y) to pass therethrough.
